# EUROPEAN PATENT SPECIFICATION

(11) **EP 1 833 665 B1**
(45) Date of publication and mention of the grant of the patent: **06.03.2013**
(21) Application number: 06701956.2
(22) Date of filing: 04.01.2006
(51) Int. Cl.: B32B 3/06

(54) **PLASTIC PANEL**
KUNSTSTOFFPLATTE
PANNEAU EN PLASTIQUE

(30) Priority: 06.01.2005 KR 20050001096; 14.11.2005 KR 20050108550
(43) Date of publication of application: 19.09.2007
(73) Proprietor: LG Chemical Co. Ltd, Seoul 150-721 (KR)
(72) Inventor: YOON, In-se, 102-903, Shinseochunggutown, Gyeongsangbuk-do 701-300 (KR); AHN, Hyung-jun, 310-403, Chungsol APT., Chungcheongnam-do 305-752 (KR); KIM, Hee-deog, Nowon-gu, Seoul 139-230 (KR)
(74) Representative: HOFFMANN EITLE
(86) International application number: PCT/KR2006/000029
(87) International publication number: WO 2006/073267

(56) References cited:
- EP-A2- 1 002 843
- WO-A1-01/58740
- DE-A1- 3 331 199
- DE-A1- 3 602 293
- DE-A1- 19 737 966
- ES-A1- 2 117 549
- FR-A1- 2 706 573
- JP-A- 03 061 025
- JP-A- 09 125 654
- JP-A- 61 130 524
- US-A- 4 798 946
- US-A- 5 322 722
- US-A- 5 358 773
- US-A- 5 443 673
- US-A1- 2004 231 784

## Description

### [Technical Field]

The present invention relates to a plastic panel, and more particularly, to a plastic panel comprising an inner panel and an outer panel wherein bonding grooves to be coated with adhesive are formed on one of the inner and outer panels.

### [Background Art]

DE 36 02 293 A1 discloses in combination the features of the pre-characterizing part of claim 1 below.

In general, a panel is made of a single plate. However, in the case of a vehicle door in which it is necessary to contain some articles, two panels, i.e. an inner panel and an outer panel, are bonded to each other in order to contain the necessary articles between the inner and outer panels. In particular, a bonded panel composed of inner and outer panels is typically used as a tail gate of a vehicle. Members for opening/closing and locking a door, members for operating a wiper and a variety of reinforcing members for installing the wiper and aforementioned members are provided in the vehicle tail gate. For example, a hinge used for opening/closing the door and a hinge reinforcement thereof are provided at an upper end of the tail gate; a space for installing a wiper motor of a wiper system and a wiper motor bracket thereof are provided at the center of a lower portion of the vehicle tail gate; and a latch bracket used for mounting a latch for opening/closing the tail gate is also provided at the center of a lower end of the tail gate. Accordingly, bonding surfaces are generally formed along an edge of the inner and outer panels between which a space is thus formed.

The inner and outer panels of the vehicle tail gate are generally manufactured from a steel sheet. In such a case, however, the two steel sheets should be joined and assembled through a spot welding method, and thus, a thickness of the steel sheet should be increased up to a certain thickness. Therefore, this leads to the increase of overall weight and production costs of the tail gate. Accordingly, the steel sheet for use in the tail gate has been recently replaced with a plastic sheet.

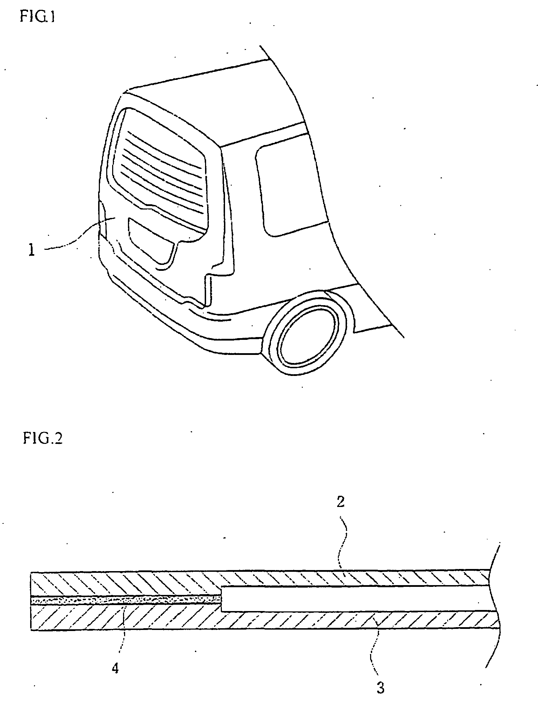

In the case of the plastic panel, such as the vehicle tail gate, manufactured by coupling two inner and outer panels with each other, the inner and outer panels are bonded and assembled with each other using the conventional adhesive. Since the bonding surface of the currently available inner and outer panels is planar (See FIG. 2), there is a problem in that the used adhesive leaks out of the bonded panels. In particular, since the adhesive is applied onto the planar bonding surface, the adhesive, if it has certain fluidity, inevitably leaks out from the panels after applied on the bonding surface. This problem can occur when the adhesive is manually applied and also even when an accurate amount of adhesive is applied by using adhesive coating equipment.

Accordingly, the adhesive is excessively spent more than is necessary and an additional process for removing the adhesive leaked between the inner and outer panels is required. Consequently, there are some problems that it takes a long time to manufacture the panel and a manufacturing cost is increased.

The present invention is conceived to solve the aforementioned problems of the conventional plastic panel. An object, obtainable with embodiments of the present invention, is to provide a plastic panel in which a bonding groove to be coated with an adhesive is formed on an inner or outer panel to prevent the adhesive from leaking to the outside.

Another object obtainable with embodiments of the present invention is to provide a plastic panel in which an adhesive can be applied at a uniform thickness to correct positions by using a bonding groove formed on the inner or outer panel serving as a guide even when the adhesive is manually applied.

A further object obtainable with embodiments of the present invention is to provide a plastic panel wherein even when an adhesive with certain fluidity is used, the adhesive does not leak out between the inner and outer panels, whereby post-processing work for enhancing the external appearance is not required, manufacturing time and costs can be reduced, and a bonding force can be increased due to an increased bonding area.

### [Summary of the Invention]

The present invention is defined in claim 1 below. The dependent claims are directed to optional and preferred features.

According to claim 1, embodiments of which may achieve the above object, there is provided a plastic panel comprising an inner panel and an outer panel wherein bonding grooves are formed on one of the inner and outer panels.

The bonding grooves are formed on one of the inner and outer panels, while protrusions corresponding to the shape of the bonding grooves are formed at bonding surfaces on the other of the inner and outer panels.

The bonding grooves or bonding surfaces are formed with stoppers.

Preferably, the bonding grooves formed on the inner or outer panel of the plastic panel are formed on the inner panel to maintain strength of the outer panel.

Since the bonding grooves are formed at bonding surfaces of the inner or outer panel, it is possible to prevent the applied adhesive from leaking to the outside. Further, since the bonding grooves formed on the inner or outer panel serve as a guide when the adhesive is applied, the adhesive can be applied at a uniform thickness to correct positions even though it is manually applied. Furthermore, since stoppers and additional spaces are provided on the bonding grooves or bonding surfaces, even adhesive with certain fluidity cannot leak out between the inner and outer panels. Therefore, the post-processing work for enhancing the external appearance is not required, the manufacturing time and costs can be reduced, and the bonding force can be increased due to the increased bonding area.

### [Description of Drawings]

To enable a better understanding of the present invention, and to show how the same may be carried into effect, reference will now be made, by way of example only, to the accompanying drawings, in which:-
Fig. 1 is a partial perspective view showing a state where a tail gate is mounted to a vehicle;
Fig. 2 is a sectional view of a related art plastic panel;
Fig. 3 is a sectional view showing a bonded structure of an embodiment of a plastic panel according to the present invention;
Fig. 4 is a perspective view of the embodiment of the present invention, in which stoppers are employed; and
FIGS. 5 to 7 are sectional views illustrating a process of assembling the embodiment of the plastic panel according to the present invention.

### [Detailed Description]

Hereinafter, the present invention will be described in detail with reference to the accompanying drawings.

Inner and outer panels 2 and 3 constituting the plastic panel of the present invention can be manufactured from sheet molding compounds (SMC), glass mat thermoplastics (GMT), polyethylene terephthalate (PET), PA, PC and the like as a raw material by means of the general compression molding method or injection molding method. The inner and outer panels 2 may be the same as or different from each other in view of thickness.

In embodiments of the plastic panel of the present invention, at least one bonding groove 7 in which an adhesive is applied is formed on any one of the inner and outer panels 2 and 3.

The other of the inner and outer panels 2 and 3, in which the bonding groove is not formed, is formed with a bonding surface at a position corresponding to the bonding groove 7 such that the bonding surface can be bonded to the bonding groove using the adhesive 4 applied to the bonding groove.

The bonding surface is shaped as a protrusion 8 corresponding to a shape of the bonding groove. Even in such a case, it is preferred that a space with a certain interval (gap) be formed between a bottom surface of the protrusion and a floor surface of the bonding groove such that an adhesive can be injected (applied) at a proper thickness in the gap of the space.

Since the plastic panel obtained by mechanically coupling the inner and outer panels 2 and 3 with each other using a bolt and nut cannot be tightly sealed, the inner and outer panels are generally assembled into the plastic panel by means of a chemical bonding method using an adhesive. An embodiment of the plastic panel of the present invention is manufactured in such a manner that the adhesive 4 is applied to the bonding groove 7 formed along an edge of the inner or outer panel 2 or 3 and the two panels are then coupled and bonded to each other.

The inner and outer panels 2 and 3 of the plastic panel according to the present invention have bonding grooves having various sectional shapes such that a bonding strength higher than a certain level can be maintained after the inner and outer panels have been bonded to each other. Once the number and sectional shape of the bonding grooves 7 to be formed is determined, a width and depth of the bonding groove can be determined and formed such that the adhesive can be applied to the bonding groove to a suitable bonding area and thickness enough to keep bonding strength to the certain level or more. The bonding area and thickness by which the bonding strength can be maintained after two panels have been bonded may vary according to the kinds of adhesive. However, once the adhesive is selected, bonding grooves 7 with a width and depth suitable for the selected adhesive can be formed. For example, if a bonding area and thickness of the bonding groove suitable for the kind of selected adhesive is determined, the bonding grooves 7 and the corresponding protrusions, if necessary, enough to ensure the suitable width and thickness are manufactured. Then, a volume of an adhesive to be applied is calculated and the adhesive as much as the calculated volume is applied to the bonding grooves. Therefore, the two panels can be coupled and bonded to each other. At this time, the amount of the adhesive applied is set slightly smaller than the volume of the bonding groove 7 formed between the inner and outer panels, and thus, it is possible to prevent the applied adhesive from leaking out between the bonded panels.

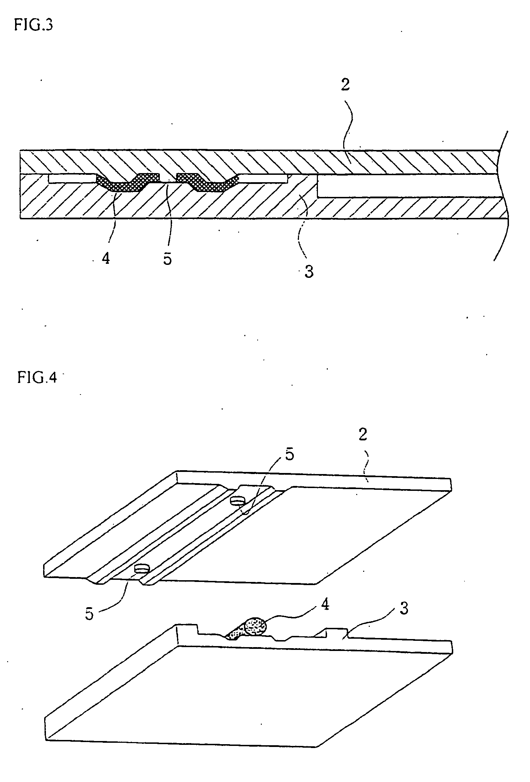

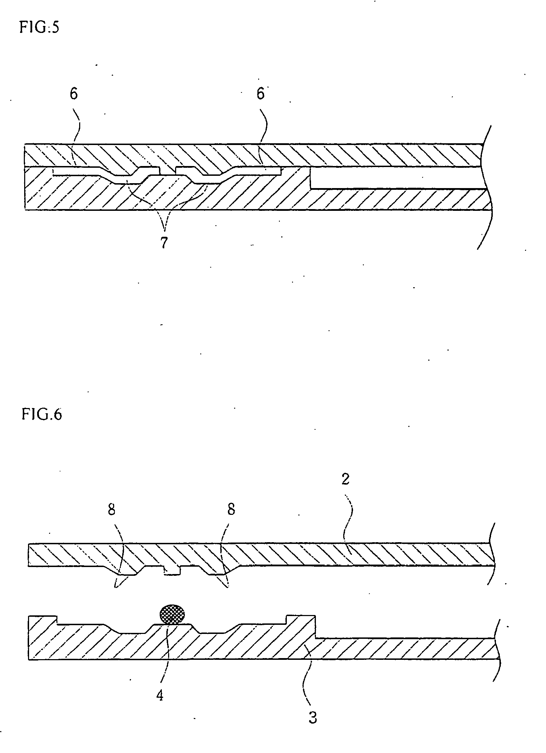

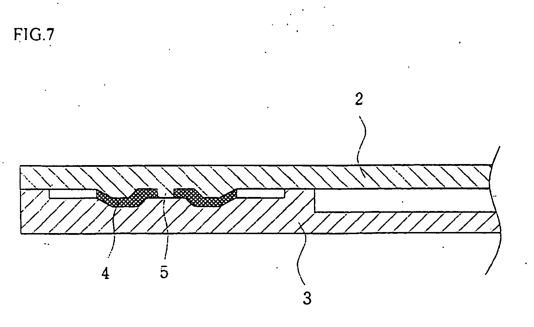

In the present invention, an additional space or spaces 6 are further formed at one or both sides of the bonding grooves by extending the bonding grooves 7 toward the one or both sides. Therefore, even though the adhesive is injected in the bonding groove more than the volume of the bonding groove, it is possible to prevent the applied adhesive from leaking out between the bonded panels. In a case where the additional spaces are formed at both sides of the bonding grooves, their widths can be different from each other. Further, the additional spaces 6 can be formed to have the same depth (See FIGS. 3 to 7). However, the depth of the additional spaces can be gradually decreased away form the bonding groove such that the bonding area per an amount of adhesive applied can be increased.

On the other hand, a stopper can be configured (formed) on the bonding groove or the bonding surface corresponding to the bonding groove to prevent an incomplete bonding state from occurring at the bonded region or prevent the thickness of the applied adhesive from being decreased when the inner and outer panels are pressed and then bonded to each other.

In embodiments of the present invention, it is most desirable that a thickness (height) of the stopper be equal to the gap between the floor surface of the bonding groove and the bonding surface. However, the height may be slightly less than the gap. Further, a width enough to withstand a bonding pressure applied when the inner and outer panels are bonded and coupled to each other is sufficient for the stopper. Accordingly, it is preferred that the width of the stopper be formed as narrow as possible.

The stoppers 5 can be formed on the bonding groove or bonding surface at regular intervals (See FIG. 4). Alternatively, the stopper 5 can be formed to continuously extend along the bonding groove or bonding surface (not shown).

Further, the stopper 5 can be separately manufactured and then placed on the bonding surface or bottom surface of the bonding groove 7. Alternatively, the stopper can be formed integrally with the panel.

Since the stopper 5 is formed, the bonding groove and bonding surface cannot be further pressed. Thus, the two panels can be bonded to each other with a predetermined pressure. Due to the aforementioned structure, therefore, an amount of adhesive used more than necessary can be minimized, and the conventional problem in that the fluid adhesive leaks out between the inner and outer panels and contaminates the exterior of the plastic panel can also be solved. Furthermore, a bonding force can be maximized.

### [Industrial Applicability]

The plastic panel of the present invention can be usefully applied to a vehicle door, in particular, a panel for a tail gate.

The present invention has the following advantages. That is, since the bonding groove is bonded to the bonding surface of the inner or outer panel, it is possible to prevent the applied adhesive from leaking to the outside. Further, since the bonding groove formed on the inner or outer panel serves as a guide when the adhesive is applied, the adhesive can be applied at a uniform thickness to correct positions even though it is manually applied. Furthermore, since a stopper and additional space are provided on the bonding groove or bonding surface, even an adhesive with certain fluidity cannot leak out between the inner and outer panels. Therefore, the post-processing work for enhancing the external appearance is not required, the manufacturing time and costs can be reduced, and the bonding force can be increased due to the increased bonding area.

## Claims

1. A plastic panel (1) comprising an inner panel (2) and an outer panel (3), wherein bonding grooves (7) to be coated with adhesive are formed on one of said inner panel and outer panel, and bonding surfaces are formed on the other of said inner panel and outer panel at positions corresponding to said bonding grooves,
**characterized in that** said bonding surfaces are shaped as protrusions (8) corresponding to shapes of said bonding grooves (7), and stoppers (5) are formed in a space between the bonding protrusions and the bonding grooves,
wherein an additional space or space (6) are further formed at one or both sides of the bonding grooves by extending said bonding grooves (7) toward the one or both sides.

2. The plastic panel as claimed in claim 1, wherein said bonding grooves (7) are formed on the inner panel (2).

3. The plastic panel as claimed in claim 1 or 2, wherein each of said stoppers (5) has a height (thickness) which is equal to or smaller than a gap between said bonding surface and a floor surface of said bonding groove.

4. The plastic panel as claimed in claim 1, 2 or 3, wherein said stoppers (5) are formed integrally with said inner (2) or outer (3) panel.

5. The plastic panel as claimed in any preceding claim, wherein said plastic panel is used for a vehicle door.

## Patentansprüche

1. Kunststoffplatte, die eine innere Platte (1) und eine äußere Platte (3) aufweist, wobei auf der inneren Platte oder äußeren Platte mit Haftmittel zu beschichtende Verbindungsnuten (7) ausgebildet sind, und auf der anderen, der inneren Platte oder äußeren Platte, Verbindungsflächen an zu den Verbindungsnuten korrespondierenden Stellen ausgebildet sind,
**dadurch gekennzeichnet, dass** die Verbindungsflächen als Vorsprünge (8) geformt sind, die zu den Formen der Verbindungsnuten (7) korrespondieren, und in einem Zwischenraum zwischen den Verbindungsvorsprüngen und den Verbindungsnuten Anschlageinrichtungen (5) ausgebildet sind, wobei ferner zu einer oder beiden Seiten der Verbindungsnuten durch Ausdehnen der Verbindungsnuten (7) in Richtung der einen oder beider Seiten ein zusätzlicher Zwischenraum oder Zwischenräume (6) ausgebildet sind.

2. Kunststoffplatte nach Anspruch 1, wobei die Verbindungsnuten (7) auf der inneren Platte (2) ausgebildet sind.

3. Kunststoffplatte nach Anspruch 1 oder 2, wobei jede der Anschlageinrichtungen (5) eine Höhe (Dicke) aufweist, die gleich oder kleiner ist als eine Lücke zwischen der Verbindungsfläche und einer Bodenfläche der Verbindungsnut.

4. Kunststoffplatte nach Anspruch 1, 2 oder 3, wobei die Anschlageinrichtungen (5) einstückig mit der inneren (2) oder äußeren (3) Platte ausgebildet sind.

5. Kunststoffplatte nach einem der vorstehenden Ansprüche, wobei die Kunststoffplatte für eine Fahrzeugtür verwendet wird.

## Revendications

1. Panneau en matière plastique (1) comprenant un panneau interne (2) et un panneau externe (3), où des rainures de liaison (7) à revêtir avec un adhésif sont formées sur l'un desdits panneau interne et panneau externe, et des surfaces de liaison sont formées sur l'autre desdits panneau interne et panneau externe à des positions correspondant auxdites rainures de liaison,
**caractérisé en ce que** lesdites surfaces de liaison sont conformées sous la forme de protubérances (8) correspondant aux formes desdites rainures de liaison (7), et des butoirs (5) sont formés dans un espace entre les protubérances de liaison et les rainures de liaison,
où un ou plusieurs espaces supplémentaires (6) sont en outre formés au niveau d'un ou des deux côtés des rainures de liaison en étendant lesdites rainures de liaison (7) vers l'un ou les deux côtés.

2. Panneau en matière plastique selon la revendication 1, dans lequel lesdites rainures de liaison (7) sont formées sur le panneau interne (2).

3. Panneau en matière plastique selon la revendication 1 ou 2, dans lequel chacun desdits butoirs (5) présente une hauteur (épaisseur) qui est inférieure ou égale à un interstice entre ladite surface de liaison et une surface de plancher de ladite rainure de liaison.

4. Panneau en matière plastique selon la revendication 1, 2 ou 3, dans lequel lesdits butoirs (5) sont formés intégralement avec ledit panneau interne (2) ou externe (3) .

5. Panneau en matière plastique selon l'une des revendications précédentes, dans lequel ledit panneau en matière plastique est utilisé pour une porte de véhicule.
